# EUROPEAN PATENT APPLICATION

(11) **EP 3 621 295 A1**
(43) Date of publication of application: **11.03.2020**
(21) Application number: 19190950.6
(22) Date of filing: 09.08.2019
(51) Int. Cl.: H04N 5/272, G06T 3/00

(54) **DISPLAY CONTROL APPARATUS, IMAGING APPARATUS, CONTROL METHOD, PROGRAM, AND COMPUTER READABLE MEDIUM**

(30) Priority: 06.09.2018 JP 2018166929
(71) Applicant: CANON KABUSHIKI KAISHA, Ohta-ku Tokyo 146-8501 (JP)
(72) Inventor: OYAMA, Yasufumi, Tokyo, 146-8501 (JP)
(74) Representative: TBK

(57) **Abstract**

A display control apparatus according to the present invention includes: a display control unit configured to control so as to display a part of an image corresponding to a viewing direction, on a screen; and a change unit configured to change the part of the image in accordance with changing the viewing direction, wherein, in a case where the part of the image is a range captured in a specific direction in the image, the display control unit controls so as to display a graphic image superimposed on the part of the image.

## Description

### BACKGROUND OF THE INVENTION

### Field of the Invention

The present invention relates to a display control apparatus, an imaging apparatus, a control method, a program, and a computer readable medium.

### Description of the Related Art

An imaging apparatus that can easily capture a 360° full-view spherical image (omnidirectional image, full circumferential image, 360° image) by one imaging operation is known. An imaging apparatus that can capture an image that does not reach 360° but is in a wide range, more than 180°, is also known. Further, a method of displaying a part of the image captured by such an imaging apparatus (image capturing a wide range: wide range image) as a display range on a display (display apparatus), and changing the display range based on the user operation (including changing orientation of the display unit) is also known.

In the wide range image, which is a digital photograph, a photographer holding the image apparatus, a fixing tool to fix the imaging apparatus (e.g. tripod) and the like are captured. A photographer often captures an image by extending their hand straight upward to support the image apparatus in order to capture the image in all directions. Therefore it is more likely that the photographer, a fixing tool and the like are captured in in the range imaged in the ground direction.

The imaging apparatus according to Japanese Patent Application Publication No. 2003-244511 is configured such that a grip is disposed directly under the imaging apparatus, so that the photographer, fixing tool and the like are not captured in the image, that is, the range directly under and directly above are not captured in the image. However, in the case of the imaging apparatus according to Japanese Patent Application Publication No. 2003-244511, which does not capture the range directly under and directly above the apparatus in the image, a perfect omnidirectional image cannot be acquired.

### SUMMARY OF THE INVENTION

When a target image (image of a display target) is displayed on a display apparatus, a graphic image (a character string and an icon) that indicates information related to the target image and the state of the display apparatus may be displayed. When such a graphic image is displayed, the following two methods are normally used: a method of displaying the graphic image so as to be superimposed on the target image; and a method of displaying the target image in a small size on a part of the display surface, and displaying the graphic image on another portion (in a blank space) of the display surface. In the case of the first method, however, the target image may be visually interrupted by the graphic image since the graphic image is superimposed on the target image. And in the case of the second image, visibility of the target image drops because the target image is displayed small.

In the case of the technique according to Japanese Patent Application Publication No. 2009-21733, one of a plurality of templates is selected according to the user operation, and the character information is displayed in a position corresponding to the selected template. However, even if the technique according to Japanese Patent Application Publication No. 2009-21733 is used, the position corresponding to the selected template is not necessarily an optimum position, and visibility of the target image may be interrupted by the graphic image.

With the foregoing in view, the present invention provides a technique which allows displaying the graphic image more appropriately in the case where a part of a wide range image is displayed as a display range on the display unit, and the graphic image is additionally displayed.

The present invention in its first aspect provides a display control apparatus as specified in claims 1 to 11. The present invention in its second aspect provides a control method as specified in claim 12. The present invention in its third aspect provides a program as specified in claim 13. The present invention in its first aspect provides a computer readable medium as specified in claim 14.

According to the present invention, in the case where a part of a wide range image is displayed as a display range on the display unit and the graphic image is additionally displayed, the graphic image can be displayed more appropriately.

Further features of the present invention will become apparent from the following description of exemplary embodiments with reference to the attached drawings.

### BRIEF DESCRIPTION OF THE DRAWINGS

FIG. 1A and FIG. 1B are external views of a digital camera according to this embodiment, and FIG. 1C is a block diagram depicting a digital camera according to this embodiment;
FIG. 2A is an external view of a display apparatus according to this embodiment, FIG. 2B is a block diagram depicting the display apparatus according to this embodiment, and FIG. 2C is an external view of a VR goggle according to this embodiment;
FIG. 3 is a flow chart depicting an image reproduction processing according to this embodiment;
FIG. 4A to FIG. 4E are images of a VR display according to this embodiment;
FIG. 5A to FIG. 5C are diagrams depicting a method of displaying a graphic image according to this embodiment; and
FIG. 6 is a flow chart depicting an image capturing processing according to this embodiment.

### DESCRIPTION OF THE EMBODIMENTS

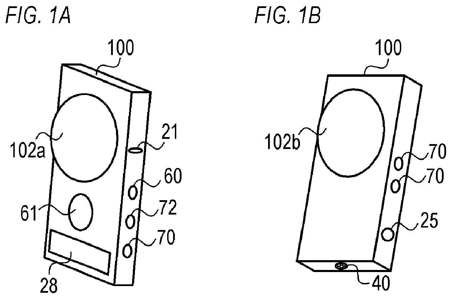

Preferred embodiments of the present invention will be described with reference to the drawings. FIG. 1A is a perspective front view (external view) of a digital camera 100, which is an example of an imaging apparatus of this embodiment. FIG. 1B is a perspective rear view (external view) of the digital camera 100. The digital camera 100 is a camera (omnidirectional camera, full-view spherical image camera) for capturing an omnidirectional image (full-view spherical image).

A barrier 102a is a protective window for a front camera unit of which image capturing range is a forward area of the digital camera 100. The front camera unit is a wide angle camera unit of which image capturing unit is a wide range (e.g. not less than 180° range vertically and horizontally) in the forward direction of the digital camera 100, for example. A barrier 102b is a protective window for a rear camera unit of which image capturing range is the backward area of the digital camera 100. The rear camera unit is a wide angle camera unit of which image capturing range is a wide range (e.g. not less than 180° range vertically and horizontally) in the backward direction of the digital camera 100, for example.

A display unit 28 displays various information. A shutter button 61 is an operation unit (operation member) that instructs image capturing. A mode selector switch 60 is an operation unit that switches between various modes. A connection I/F 25 is a connector that connects a connection cable to the digital camera 100, whereby an external apparatus (e.g. smartphone, personal computer, TV) is connected to the digital camera 100 via a connection cable. An operation unit 70 includes various switches, buttons, dials, touch sensors or the like that receives various operation inputs from the user. The power switch 72 is a push button to switch ON/OFF of the power supply.

A light-emitting unit (light-emitting member) 21 is a light-emitting diode (LED) or the like, and notifies the various states of the digital camera 100 to the user by a light-emitting pattern or color of emitted light. A fixing unit 40 is, for example, a screw hole for a tripod, and is used to install and secure the digital camera 100 to such a fixing tool as a tripod.

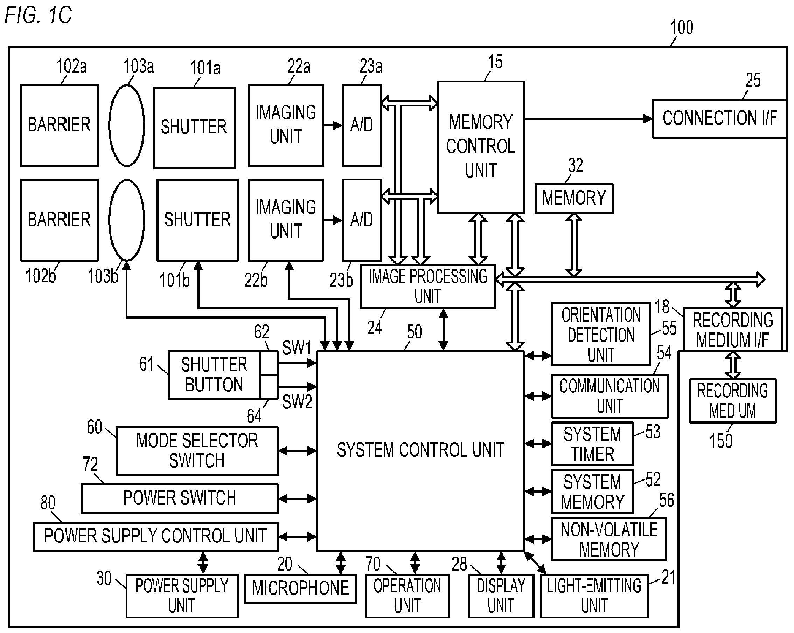

FIG. 1C is a block diagram depicting a configuration example of the digital camera 100.

The barrier 102a covers an imaging system (e.g. imaging lens 103a, shutter 101a, imaging unit 22a) of the front camera unit, so as to prevent contamination of and damage to the image system. The imaging lens 103a is a lens group including a zoom lens and a focus lens, and is a wide angel lens. The shutter 101a is a shutter having a diaphragm function which adjusts the incident amount of the object light to the imaging unit 22a. The imaging unit 22a is an image pickup element (image sensor) constituted of CCD and CMOS elements to convert an optical image into electric signals. An A/D convertor 23a converts an analog signal outputted from the imaging unit 22a into a digital signal. The imaging lens 103a, the shutter 101a and the imaging unit 22a are controlled by a system control unit 50. Instead of disposing the barrier 102a, the outer surface of the imaging lens 103a may be exposed so that the imaging lens 103a prevents the contamination of and damage to the other components of the imaging system (e.g. shutter 101a and imaging unit 22a).

The barrier 102b covers an imaging system (e.g. imaging lens 103b, shutter 101b, imaging unit 22b) of the rear camera unit, so as to prevent contamination of and damage to the imaging system. The imaging lens 103b is a lens group including a zoom lens and a focus lens, and is a wide angle lens. The shutter 101b is a shutter having a diaphragm function which adjusts the incident amount of the object light to the imaging unit 22b. The imaging unit 22b is an image pickup element constituted of CCD and CMOS elements to convert an optical image into electric signals. An A/D convertor 23b converts an analog signal outputted from the imaging unit 22b into a digital signal. The imaging lens 103b, the shutter 101b and the imaging unit 22b are controlled by the system control unit 50. Instead of disposing the barrier 102b, the outer surface of the imaging lens 103b may be exposed so that the imaging lens 103b prevents the contamination of and damage to other components of the imaging system (e.g. shutter 101b and imaging unit 22b).

A virtual reality (VR) image is captured by the imaging unit 22a and the imaging unit 22b. The VR image is an image that can be VR-displayed (displayed in the display mode "VR view"). The VR image includes an omnidirectional image (full-view spherical image) captured by the omnidirectional camera (full-view spherical image camera), and a panoramic image having a picture range (effective picture range) that is wider than a display range which can be displayed on the display unit at the same time. The VR image includes not only a still image, but also a moving image and a live image (image acquired approximately in real-time from the camera). The VR image has a maximum picture range (effective picture range) of 360° vertically (vertical angle, angle from the zenith, elevation angle, depression angle, altitude angle, pitch angle), and 360° horizontally (horizontal angle, azimuth angle, yaw angle).

The VR image includes an image having a wide angle of view (visual field range) that is wider than an angle of view which a normal camera can capture, or an image having a wider picture range (effective picture range) that is wider than a display range which can be displayed on the display unit at the same time, even if a visual field of such images is less than 360° vertically and less than 360° horizontally. For example, an image captured by a full-view spherical image camera, which can capture objects in a visual field (angle of view) at 360° in the horizontal direction (horizontal angle, azimuth angle) and 210° in the vertical direction with the zenith at the center, is a type of VR image. Further, an image captured by a camera which can capture objects in a visual field (angle of view at 180° in the horizontal direction (horizontal angle, azimuth angle) and at 180° in the vertical direction with the zenith at the center is a type of VR image. In other words, an image having a picture range of which visual field that exceeds 160° (±80°) in the vertical direction and the horizontal direction respectively, and the picture range that is wider than a range that an individual can visually recognize at the same time, is a type of VR image.

When this VR image is VR-displayed (displayed in the display mode "VR view"), a seamless omnidirectional picture can be viewed in the horizontal direction (horizontally rotating direction) by changing the orientation of the display apparatus (display apparatus which displays a VR image) in the horizontally rotating direction. In the vertical direction (vertically rotating direction), a seamless omnidirectional picture can be viewed in the ±105° range from the point directly overhead (zenith), but the range outside ±105° becomes a blank region where no picture exists. The VR image can be defined as "an image of which picture range is at least a part of the virtual space (VR space)".

The VR display (VR view) is a display method (display mode) in which the display range, to display a picture in a partial visual field range (display range, display region) corresponding to a viewing direction designated in accordance with the orientation of the display apparatus, in the VR image, can be changed. In the case of viewing the picture while wearing a head mount display (HMD) which is a display apparatus, a picture in a visual field range, in accordance with the direction of the face of the user, is displayed. For example, it is assumed that a picture at a visual field angle (angle of view) at 0° in the horizontal direction (specific azimuth, such as north), and 90° in the vertical direction (90° from the zenith, that is horizontal direction), is displayed at a certain timing. In this state, if the orientation of the display apparatus is reversed front to back (e.g. display apparatus is changed from facing south to facing north), the display range is changed to a picture of which visual field angle is 180° in the horizontal direction (opposite azimuth, such as south), and 90° in the vertical direction (horizontal). In the case where the user is viewing an HMD, if the user turns their face from north to south (that is, looks to their back), the picture displayed on the HMD also changes from the picture at the north to the picture at the south. By this VR display, a sensation (sense of immersion) as if being in the VR image (VR space) can be visually provided to the user. A smartphone connected to the VR goggle (head mount adapter) can be regarded as a type of HMD.

The display method of a VR image is not limited to the above mentioned VR display. Instead of a change in the orientation, the user operation with a predetermined operation member (e.g. touch panel, direction button) may be detected (operation detection), so that the display range is moved (scrolled) in accordance with the user operation. The user operation with a predetermined operation member is, for example, a touch-move on the touch panel, a drag operation of a mouse, and pressing a direction button. In the VR display (when the display mode is "VR view"), both the processing to change the display range in accordance with the change in orientation and the processing to change the display range in accordance with the user operation with the predetermined operation member may be performed.

An image processing unit 24 performs a predetermined processing (pixel interpolation, resize processing such as zoom out, color conversion processing) on data from the A/D convertor 23a or A/D convertor 23b, or on data from the memory control unit 15. The image processing unit 24 also performs predetermined arithmetic processing using the captured image data. A system control unit 50 performs exposure control and distance measurement control based on the computing result acquired by the image processing unit 24. Thereby such processing as auto focus (AF) processing, automatic exposure (AE) processing, and pre-flash (EF) processing are performed. Further, the image processing unit 24 performs a predetermined arithmetic processing using the captured image data, and performs auto white balance (AWB) processing based on the acquired computing result. Furthermore, the image processing unit 24 performs basic image processing on two images (two fish eye images; two wide angle images) acquired by the A/D convertor 23a and the A/D convertor 23b, and performs image connection processing, which combines the two images after the basic image processing is performed. Thereby a single VR image is generated. Further, the image processing unit 24 performs image extraction processing, zooming processing and distortion correction processing to VR-display the VR image when the VR display is performed in live view mode, or when the VR image is reproduced, then performs rendering by writing the processing result in a predetermined storage region (VRAM) in the memory 32.

In the image connection processing, the image processing unit 24 regards one of these two images as a reference image and the other as a comparison image, and calculates the amount of deviation between the reference image and the comparison image for each area by pattern matching processing, then detects a connection position to connect the two images based on the amount of deviation for each area. Thereafter, the image processing unit 24 corrects the distortion of each image by geometric conversion, considering the detected connection position and the lens characteristics of each optical system. Thereby each image is converted into an image in full-view spherical format (full-view spherical image format). Then the image processing unit 24 generates one full-view spherical image (VR image) by combing (blending) the two images in the full-view spherical format. The generated full-view spherical image is an image based on the equidistant cylindrical projection, for example, and a position of each pixel of the full-view spherical image can be corresponded to the coordinates on the surface of the sphere (VR space).

The output data from the A/D convertors 23a and 23b is written to the memory 32 via the image processing unit 24 and the memory control unit 15, or via the memory control unit 15 without using the image processing unit 24. The memory 32 stores image data, which was acquired by the imaging units 22a and 22b and converted into digital data by the A/D convertors 23a and 23b, and the image data to be outputted from the connection I/F 25 to the external display apparatus. The memory 32 has sufficient memory capacity to store a predetermined number of still images, and a predetermined time of moving images and sounds.

The memory 32 is also used as a memory to display images (video memory). The data to display images stored in the memory 32 can be outputted from the connection I/F 25 to an external display apparatus. If VR images, which were captured by the imaging units 22a and 22b, and generated by the image processing unit 24 and stored in the memory 32, are sequentially transferred to an external display apparatus and displayed, a function as an electronic view finder can be implemented, and a live view display (LV display) can be performed. An image displayed by the live view display is hereafter called a live view image (LV image). If the VR image stored in the memory 32 is sequentially transferred to an external apparatus (e.g. smartphone) which is wirelessly connected via a communication unit 54 and displayed, the live display (remote LV display) can be implemented.

The digital camera 100 may include a main body display unit which can display an image, and a picture equivalent to the picture, which was described above as a picture outputted from the connection I/F 25 and displayed on the external display apparatus, may be displayed on the main body display unit.

A non-volatile memory 56 is a memory which is a recording medium in which data can be recorded and erased electrically, and is EEPROM, for example. In the non-volatile memory 56, constants, programs and the like, to operate the system control unit 50, are recorded. A program here refers to a computer program to execute various processing in the flow charts, which will be described later in this embodiment.

The system control unit 50 is a control unit which includes at least one processor or circuit, and controls the digital camera 100 in general. The system control unit 50 implements each later mentioned processing of this embodiment by executing the programs recorded in the above mentioned non-volatile memory 56. A system memory 52 is a RAM, for example, and the system control unit 50 develops, in the system memory 52, constants and variables to operate the system control unit 50, and the programs read from the non-volatile memory 56. The system control unit 50 also controls display by controlling the memory 32, the image processing unit 24, the memory control unit 15 and the like. A system timer 53 is a clocking unit that measures time used for various controls and the time of the internal clock.

The mode selector switch 60, the shutter button 61, the operation unit 70 and the power switch 72 are used to input various operation instructions to the system control unit 50.

The mode selector switch 60 switches the operation mode of the system control unit 50 to one of: a still image recording mode, a moving image capturing mode, a reproduction mode, a communication connection mode and the like. The modes included in the still image recording mode are: auto image capturing mode, auto scene discerning mode, manual mode, diaphragm priority mode (Av mode), shutter speed priority mode (Tv mode) and program AE mode. Various scene modes and custom modes to set image capturing for each image capturing scene are also included. Using the mode selector switch 60, the user can directly switch to one of these modes. The user may also switch the screen to an image capturing mode list screen first using the mode selector switch 60, then may select one of the plurality of modes displayed on the display unit 28 using another operation member. In the same manner, the moving image capturing mode may include a plurality of modes.

The shutter button 61 includes a first shutter switch 62 and a second shutter switch 64. The first shutter switch 62 turns ON in the middle of operating the shutter button 61, that is, in the half depressed state (image capturing preparation instruction), and generates a first shutter switch signal SW1. The system control unit 50 starts the image capturing preparation operation by the first shutter switch signal SW1, for auto focus (AF) processing, auto exposure (AE) processing, auto white balance (AWB) processing, pre-flashing (EF) and the like. The second shutter switch 64 turns ON at the completion of the operation of the shutter button 61, that is, in fully depressed state (image capturing instruction), and generates the second shutter switch signal SW2. The system control unit 50 starts a series of image capturing operations by the second shutter switch signal SW2, by reading the signals from the imaging units 22a and 22b to writing the image data to the recording medium 90.

The shutter button 61 is not limited to the operation member which can perform two steps of operation (half depression and full depression), but may be an operation member which can perform one step of depression. In this case, the image capturing preparation operation and the image capturing processing are continuously performed by one step of depression. This operation is the same as the operation that is performed when the shutter button, which can perform both half depression and full depression, is fully depressed (the case where the first shutter switch signal SW1 and the second shutter switch signal SW2 are generated almost simultaneously).

By selecting and operating various function icons and choices displayed on the display unit 28, appropriate functions are assigned to the operation unit 70, and the operation unit 70 functions as various function buttons. The function buttons are, for example, an end button, return button, image forward button, jump button, preview button and attribute change button. For example, when a menu button is pressed, a menu screen, where various settings can be performed, is displayed on the display unit 28. The user can intuitively perform various settings by operating the operation unit 70 while viewing the menu screen displayed on the display unit 28.

The power switch 72 is a push button to switch ON/OFF of the power supply. The power control unit 80 is constituted of a battery detection circuit, a DC-DC convertor, a switch circuit that switches a block to energize and the like, and detects the installation of a battery, the type of battery and the residual power of the battery, for example. Based on this detection result and an instruction from the system control unit 50, the power control unit 80 controls the DC-DC convertor and supplies required voltage to each unit, including the recording medium 90, for a required period. The power supply unit 30 is constituted of a primary battery (e.g. alkali battery, lithium battery), a secondary battery (e.g. NiCd battery, NiMH battery, Li battery), an AC adapter and the like.

The recording medium I/F 18 is an interface with such a recording medium 90 as a memory card and hard disk. The recording medium 90 is a recording medium to record a captured image (e.g. memory card), and is constituted of a semiconductor memory, an optical disk, a magnetic disk or the like. The recording medium 90 may be an exchangeable recording medium which is removable from the digital camera 100, or may a recording medium embedded in the digital camera 100.

A communication unit 54 transmits/receives video signal and audio signal to/from an external apparatus connected wirelessly or via cable. The communication unit 54 can also be connected to a wireless local area network (LAN) and Internet, and can communicate, via the network, with an external apparatus (e.g. server) on the network. The communication unit 54 can also communicate with an external apparatus via Bluetooth® and Bluetooth® Low Energy. The communication unit 54 can transmit images (including LV images) captured by the imaging units 22a and 22b, and images recorded in the recording medium 90, and can receive images and various other information from an external apparatus.

An orientation detection unit 55 detects an orientation of the digital camera 100 with respect to the center of gravity direction. Based on the orientation detected by the orientation detection unit 55, it can be determined whether the images captured by the imaging units 22a and 22b are images captured when the digital camera 100 was held in the horizontal position or images captured when the digital camera 100 was held in the vertical position. It can also be determined whether the images captured by the imaging units 22a and 22b are images captured by inclining the digital camera 110 in the rotation direction (e.g. yaw direction, pitch direction, roll direction), and the inclination amount can also be determined. The system control unit 50 can record the images with attaching the direction information in accordance with the orientation detected by the orientation detection unit 55 to the image file of the VR images captured by the imaging units 22a and 22b, or by rotating the image (adjusting the direction of the images so as to correct the inclination (zenith correction)). For the orientation detection unit 55, one or a combination of a plurality of sensors (e.g. acceleration sensor, gyro sensor, geomagnetic sensor, azimuth sensor, altitude sensor) can be used. Using the acceleration sensor, gyro sensor, azimuth sensor or the like constituting the orientation detection unit 55, the motion of the digital camera 100 (pan, tilt, lift up, still) can also be detected.

A microphone 20 picks up the sound around the digital camera 100, which is recorded as a sound of the VR image, which is a moving image (VR moving image). The connection I/F 25 is a connection plug, to which an HDMI® cable, USB cable or the like is connected to transmit/receive the pictures to/from the connected external apparatus.

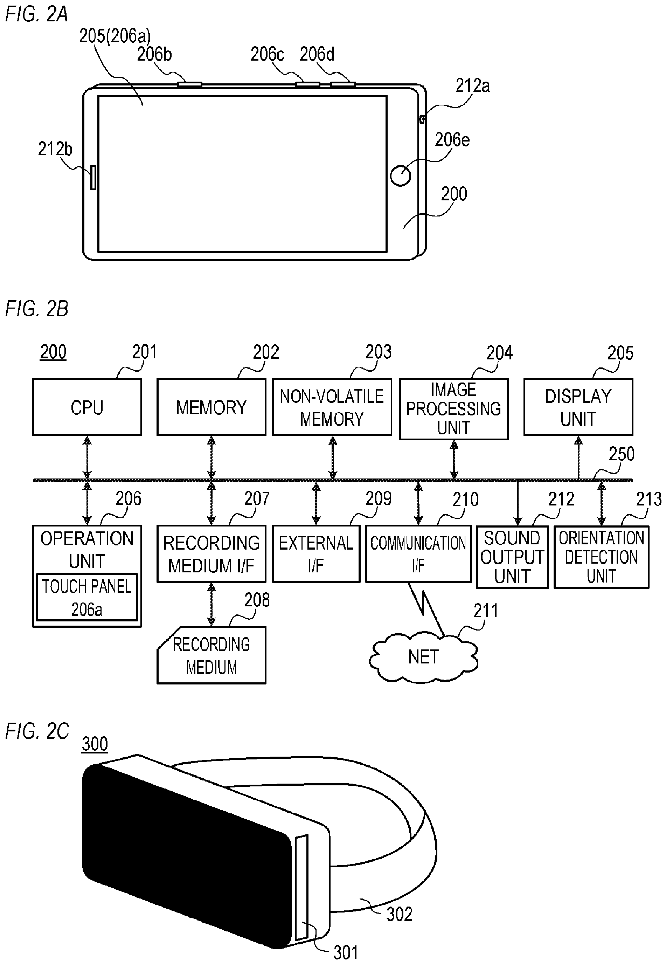

FIG. 2A is an external view of the display apparatus 200, which is an example of the display control apparatus according to this embodiment. The display apparatus 200 is a smartphone, for example. A display unit 205 displays images and various information. The display unit 205 is integrated with a touch panel 206a, so that the touch operation to the display surface of the display unit 205 can be detected. The display apparatus 200 can VR-display a VR image (VR content), generated by the digital camera 100, on the display unit 205. An operation unit 206b is a power supply button to switch the ON/OFF of the power supply of the display apparatus 200. An operation unit 206c and an operation unit 206d are volume buttons to increase/decrease the volume of the sound outputted from a sound output unit 212. An operation unit 206e is a home button to display a home screen on the display unit 205. A sound output terminal 212a is an ear phone jack and a terminal to output audio signals to the earphone, an external speaker or the like. A speaker 212b is a built in speaker to output sound.

FIG. 2B is a block diagram depicting a configuration example of the display apparatus 200. A CPU 201, a memory 202, a non-volatile memory 203, an image processing unit 204, the display unit 205, the operation unit 206, a recording medium I/F 207, an external I/F 209 and a communication I/F 210 are connected to an internal bus 250. Further, the sound output unit 212 and an orientation detection unit 213 are also connected to the internal bus 250. Each unit connected to the internal bus 250 can exchange data with each other via the internal bus 250.

The CPU 201 is a control unit which controls the display apparatus 200 in general, and is constituted of at least one processor or circuit. The memory 202 is constituted of a RAM (e.g. volatile memory using a semiconductor element), for example. The CPU 201 controls each unit of the display apparatus 200 in accordance with the programs stored in the non-volatile memory 203, using the memory 202 as a work memory, for example. In the non-volatile memory 203, image data, audio data, other data and various programs for the CPU 201 to operate are stored. The non-volatile memory 203 is constituted of a flash memory or ROM, for example.

Based on control by the CPU 201, the image processing unit 204 performs various image processing on images stored in the non-volatile memory 203 and the recording medium 208, image signals acquired via the external I/F 209, images acquired via the communication I/F 210 and the like. The image processing performed by the image processing unit 204 includes A/D conversion processing, D/A conversion processing, image data encoding processing, compression processing, decoding processing, zoom in/zoom out processing (resizing), noise reduction processing and color conversion processing. Further, the image processing unit 204 performs various types of image processing, such as panoramic development, mapping processing and conversion of a VR image, which is an omnidirectional image, or a wide range image having a picture in a wide range, even if it is not an omnidirectional image. The image processing unit 204 may be constituted of a dedicated circuit block to perform specific image processing. Depending on the type of image processing, the CPU 201 may perform image processing in accordance with a program, without using the image processing unit 204.

The display unit 205 displays an image and a graphic user interface (GUI) screen, for example, based on control by the CPU 201. The CPU 201 generates a display control signal in accordance with a program, and controls each unit of the display apparatus 200 so that an image signal to display the image on the display unit 205 is generated and outputted to the display unit 205. The display unit 205 displays an image based on the generated image signal. The display control apparatus according to this embodiment may include the configuration up to the interface which outputs an image signal display the image on the display unit 205, and the display unit 205 may be constituted by an external monitor (e.g. TV, HMD).

The operation unit 206 is an input device to receive user operation input, and includes a text information input device (e.g. keyboard), a pointing device (e.g. mouse, touch panel), buttons, dials, joystick, touch sensor and touch panel. In this embodiment, the operation unit 206 includes the touch panel 206a, and operation units 206b, 206c, 206d and 206e.

A recording medium 208, such as a memory card, CD and DVD, can be removably installed to the recording medium I/F 207. The recording medium I/F 207 reads data from the installed recording medium 208, or writes data to the recording medium 208 based on the control by the CPU 201. For example, for the recording medium 208, a recording medium 90, in which a full-view spherical image generated by the digital camera 100 is recorded, can be attached. In this case, the image signals of the VR image is read from the recording medium 208, and displayed on the display unit 205. The external I/F 209 is an interface that connects the external apparatus wirelessly or via cable, and inputs/outputs video signals and audio signals. The communication I/F 210 is an interface which communicates with an external apparatus, Internet 211 or the like, and transmits/receives various data (e.g. files, instructions). The communication I/F 210 can communicate with an external apparatus via a wireless LAN, cable LAN, Bluetooth®, Bluetooth® Low Energy or the like.

The sound output unit 212 outputs the sounds of a moving image and music data (sound files), operation sounds, ring tones and various notification tones. The sound output unit 212 is assumed to include the sound output terminal 212a to connect an earphone or the like, and the speaker 212b, but the sound output unit 212 may output sound data to an external speaker via wireless communication, for example.

The orientation detection unit 213 detects an orientation of the display apparatus 200 with respect to the center of gravity direction. Based on the orientation detected by the orientation detection unit 213, it can be determined whether the display apparatus 200 is held horizontally or vertically, is directed upward or downward, or is turned to a diagonal orientation or not, for example. It can also be determined whether the display apparatus 200 is inclined in the rotation direction (e.g. yaw direction, pitch direction, roll direction), the inclination amount if inclined, and whether the display apparatus 200 is rotated in this rotation direction. For the orientation detection unit 213, one or a combination of a plurality of sensors (e.g. acceleration sensor, gyro sensor, geomagnetic sensor, azimuth sensor, altitude sensor) can be used. If the display control apparatus according to this embodiment is a separate apparatus from the display apparatus (in the case where the display unit 205 is an external monitor), the orientation detection unit 213 may be disposed not in the display control apparatus but in the display apparatus.

As described above, the operation unit 206 includes the touch panel 206a. The touch panel 206a is an input device which is configured as a plane superimposed on the display unit 205, so that the coordinate information corresponding to the contacted position is outputted. The CPU 201 can detect the following operations or states of the touch panel 206a.
- A finger or pen which was not touching the touch panel 206a touched the touch panel 206a, that is, touch is started (hereafter called Touch-Down)
- A finger or pen is touching the touch panel 206a (hereafter called Touch-On)
- A finger or pen is moving in the state of touching the touch panel 206a (hereafter called Touch-Move)
- A finger or pen which was touching the touch panel 206a is released from the touch panel 206a, that is, touch is ended (hereafter called Touch-Up)
- Nothing is touching the touch panel 206a (hereafter called Touch-Off)

When Touch-Down is detected, Touch-On is detected at the same time. Unless Touch-Up is detected after Touch-Down, as a rule Touch-On is continuously detected. When Touch-Move is detected as well, Touch-On is detected at the same time. Even if Touch-On is detected, Touch-Move is not detected unless the touch position is moving. When Touch-Up of all fingers or a pen which was touching the touch panel 206a is detected, Touch-Off is detected.

These operations and states, and the coordinates of the position on the touch panel 206a, where a fingers or pen is touching, are notified to the CPU 201 via the internal bus, and based on the notified information, the CPU 201 determines what kind of operation (touch operation) was performed on the touch panel 206a. For Touch-Move, the moving direction of the finger or pen moving on the touch panel 206a can also be determined for each vertical component and horizontal component on the touch panel 206a based on the change of the coordinates of the position. If Touch-Move exceeding a predetermined distance is detected, it is determined that the slide operation was performed.

An operation of quickly moving a finger touching the touch panel 206a for a certain distance while continually touching the touch panel 206a, then releasing the finger, is called a flick. In other words, flick is an operation of quickly swiping a finger on the touch panel 206a. It is determined that a flick is performed when Touch-Move at a predetermined speed or more for at least a predetermined distance, is detected, and Touch-Up is immediately detected thereafter (it is determined that a flick was performed after the slide operation).

An operation of touching a plurality of locations (e.g. two points) simultaneously and moving the touch positions close to each other is called Pinch-In, and an operation of moving these touch positions away from each other is called Pinch-Out. Pinch-In and Pinch-out are collectively called a pitch operation (or pinch). For the touch panel 206a, any type of touch panel may be used, such as a resistive film type, capacitance type, surface acoustic wave type, infrared type, electromagnetic induction type, image recognition type and optical sensor type. Some types detect touch when the touch panel is contacted, and others detect touch when a finger or pen approaches the panel, but either type can be used.

FIG. 2C is an external view of a VR goggle (head mount adapter) 300 on which the display apparatus 200 can be installed. The display apparatus 200 can be used as a head mount display by being installed in the VR goggle 300. An inserting slot 301 is an inserting slot to insert the display apparatus 200. The entire display apparatus 200 can be inserted into the VR goggle 300 by positioning the display surface of the display unit 205 toward the side of a head band 302 to secure the VR goggle 300 to the head of the user (that is, toward the user). The user can view the display unit 205 in the state of wearing the VR goggle 300, in which the display apparatus 200 is inserted, on their head without holding the display apparatus 200 by hand. In this case, the orientation of the display apparatus 200 changes when the user moves their head or body. The orientation detection unit 213 detects the change in the orientation of the display apparatus 200 at this time, and the CPU 201 performs processing for the VR display based on the change in the orientation. Here the orientation detection unit 213 detecting the orientation of the display apparatus 200 is equivalent to detecting the orientation of the head of the user (direction in which the line of sight of the user is directed). The display apparatus 200 itself may be an HMD, which can be worn on the head without using the VR goggle.

The display apparatus 200 can perform the zenith correction for the VR image using the image processing unit 204. The zenith correction is the inclination correction that corrects the pitch angle and the role angle of the VR image, so that the direction to the zenith in the VR image turns to a predetermined direction (to the zenith direction in the VR space). The display apparatus 200 can display an image after performing the zenith correction, or can display an image without performing the zenith correction. As mentioned above, the digital camera 100 can also perform the zenith correction. The zenith correction may be performed by the digital camera 100 or the display apparatus 200.

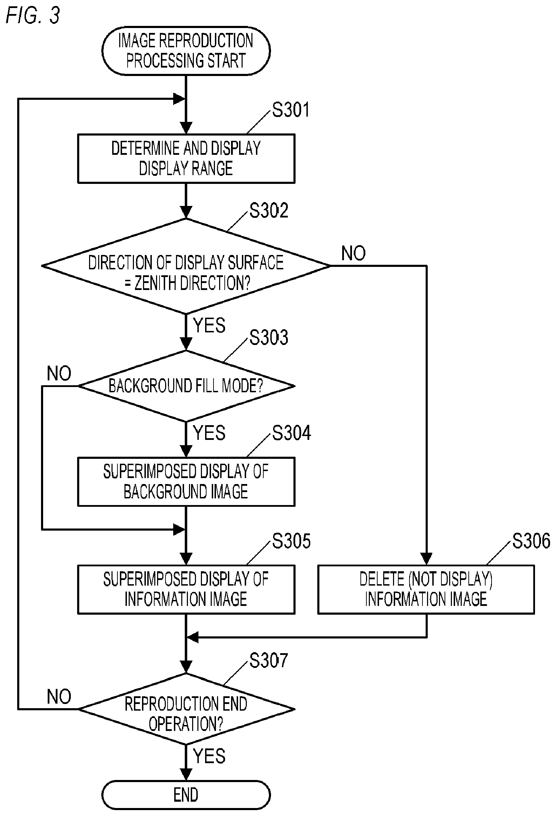

FIG. 3 is a flow chart depicting an example of an image reproduction processing of the display apparatus 200. The image reproduction processing is implemented by the CPU 201 developing the program stored in the non-volatile memory 203 (e.g. specific application program to implement VR display of a VR image stored in the recording medium 208) in the memory 202, and executing the program. The VR image stored in the recording medium 208 is a VR image captured by the digital camera 100, a standard full-view spherical image camera or the like. Zenith information, which indicates the position of capturing (projecting) the zenith direction, is attached to the VR image as metadata.

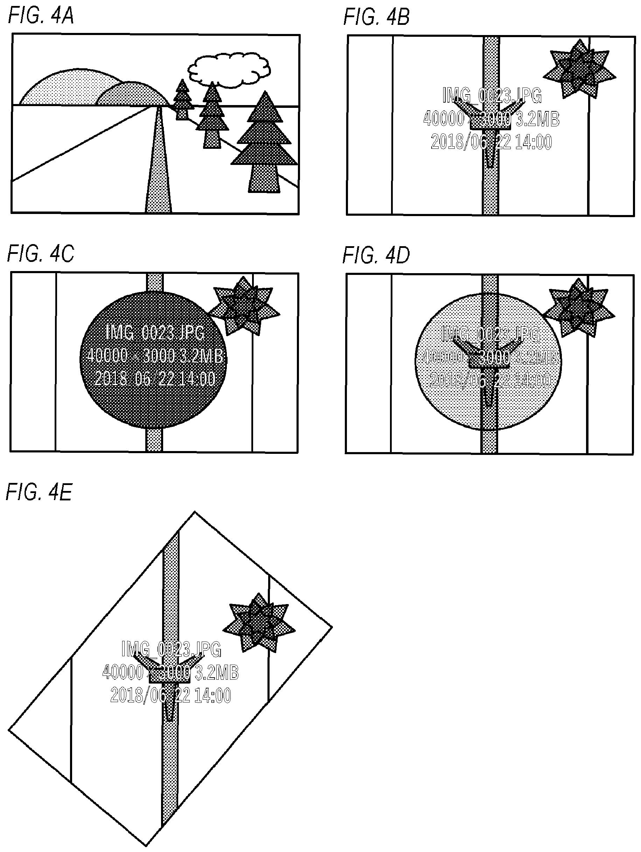

In step S301, the CPU 201 determines the display range, which is a part of the VR image in accordance with the zenith information attached to (embedded in) the VR image, and the detection result of the orientation detection unit 213 (orientation (direction) of the display apparatus 200). Then the CPU 201 displays the determined display range on the display unit 205. Thereby the VR display, to display a range (a part of the VR image), corresponding to the direction in which the user turned the display apparatus 200 on the display unit 205, is implemented. FIG. 4A to FIG. 4E are VR display examples of the VR image which was captured by the full-view spherical image camera positioned on a road using a tripod. For example, FIG. 4A is a display that is performed when the display surface of the display unit 205 is directed in the horizontal direction (direction parallel with the ground).

Then in step S302, the CPU 201 determines whether the display surface of the display unit 205 is turned in the zenith direction. In other words, the CPU 201 detects the direction in the VR image based on the direction in which the user turned the display apparatus 200, and determines whether the detected direction is the nadir direction (ground direction) that is, whether the current display range of the VR image is the range projecting in the nadir direction (ground direction). If it is determined that the display surface is turned in the zenith direction (display range in a range projected in the nadir direction), processing advances to step S303. If it is determined that the display surface is not turned in the zenith direction (display range is not a range projected in the nadir direction), on the other hand, processing advances to step S306. It is preferable to determine whether the display surface is turned in the zenith direction, allowing for a certain amount of error, but this is optional.

In step S306, the CPU 201 deletes graphic images which are displayed in the later mentioned steps S304 and S305 (the graphic images are not displayed). Then processing advances to step S307.

In step S303, the CPU 201 determines whether the background fill mode is set in the display apparatus 200. If it is determined that the background fill mode is set, processing advances to step S304, and if not set, processing advances to step S305.

In step S304, in order to improve visibility of the graphic image (information image) displayed in step S305, the CPU 201 displays a graphic image (background image) to be the background of the information image, so as to be superimposed on the VR image (current display range) on the display unit 205. The background image is superimposed on a part of the current display range, specifically a region where the information image is displayed. Then processing advances to S305. The color, shape, size, transparency and more of the background image are not especially limited. The background image may be a monochromatic image or a multicolor image (or an image with patterns). The background image may or may not be transparent to transmit through the VR image. And the background image may have a special shape, such as a rectangle and circle (including ellipse).

In step S305, the CPU 201 displays the information image on the display unit 205 as an onscreen display (OSD), so as to be superimposed on the VR image (current display range). When the processing in step S304 is performed, the information image is superimposed on the background image. Then processing advances to step S307. The information image indicates information that may be useful to the user, such as information on the VR image currently displayed. In concrete terms, the information image indicates at least any one of: the image file name, file size (data size), image size, image capturing date and time, and exchangeable image file format (EXIF) information of the VR image. The EXIF information indicates the setting conditions when the image was captured. The information image may be information that is independent from the display target VR image, such as the current time and residual battery amount of the display apparatus 200. The information image may also indicate information having nothing to do with an object of the VR image. The information image may be a character string (text image), or icons and graphics corresponding to the information.

FIG. 4B indicates a state where the background fill mode is not set and the information image is displayed. FIG. 4C indicates a state where the background fill mode is set, and a background image, which has no transparency and the information image are displayed. FIG. 4D indicates a state where the background fill mode is set, and a background image, which has transparency, and the information image are displayed.

In step S307, the CPU 201 determines whether the reproduction end operation (operation to end image reproduction processing) was performed. If it is determined that the reproduction end operation was performed, the CPU 201 ends the image reproduction processing. If the reproduction end operation was not performed, processing returns to step S301. In step S301, the display range is changed if the orientation of the display apparatus 200 is changed.

In the VR range, it is more likely that an image value of range projecting in the nadir direction (ground direction) is low. In other words, when the VR image is viewed, the range of the image in the nadir direction includes the images of the tripod and the hand of the user holding the imaging apparatus. Therefore it is unlikely that the viewers are willingly paying attention to the image in the range, or that the user is willing to show the image in the range. According to the above mentioned image reproduction processing, if the display range is a range projecting in the nadir direction, the graphic image is displayed so as to be superimposed on the display range, and if the display range is not a range projecting in the nadir direction, the graphic image is not displayed. Thereby the user can view the VR image (both the graphic image portion and other portions) without sensing (barely sensing) that the graphic image is interrupting the object to be viewed (user friendly aspect improves). Further, by displaying the graphic image, a range of the VR image, of which image value is low, can be effectively utilized. Furthermore, the user can check the graphic image by a predetermined operation, such as turning the display surface to the zenith direction, hence the graphic image can be easily checked at a desired timing (user friendly aspect improves).

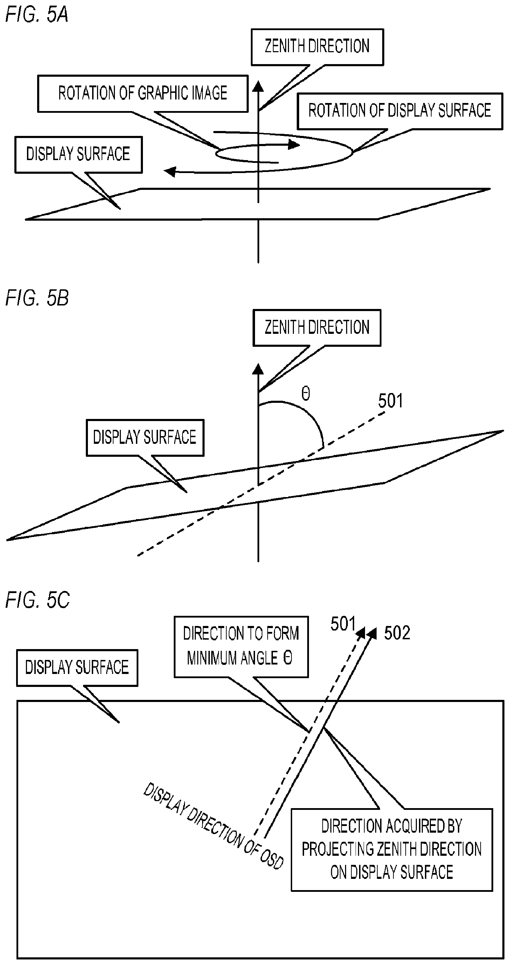

It is preferable that the direction of the graphic image, with respect to the user, is fixed. For example, it is preferable that the direction of the graphic image, with respect to the user, is unchanged, even if the display apparatus 200 is rotated around the zenith direction as the rotation axis, while maintaining the state of turning the display surface to the zenith direction. It is also preferable that the graphic image is displayed in the normal position with respect to the user. This method will be described with reference to FIG. 5A to FIG. 5C.

FIG. 5A indicates a state where the display surface (display apparatus 200) is rotated around the zenith direction as the rotation axis, while maintaining the state of turning the display surface to the zenith direction. At this time, the CPU 201 rotates the display range in accordance with the rotation of the display surface, and rotates the graphic image in the opposite direction of the rotation direction of the display range (rotation direction of the display surface). In other words, in the case where the display range is the range projecting in the nadir direction, the CPU 201 rotates the graphic image in the opposite direction of the rotation direction of the display range in accordance with the rotation of the display range around the nadir direction (zenith direction) as the rotation axis. Thereby the direction of the graphic image, with respect to the user, can be kept constant when the display apparatus 200 is rotated around the zenith direction as the rotation axis, while maintaining the display surface turning to the zenith direction.

Further, as illustrated in FIG. 5B, the display surface is inclined in a certain direction with respect to the zenith direction before the display surface is turned to the zenith direction. Then among a plurality of directions that are parallel with the display surface, a direction, of which angle formed with the zenith direction (normal line with respect to the ground) is the minimum, is uniquely determined. In FIG. 5B, the angle Θ is the minimum angle between the zenith direction and the display surface, and the broken line 501 indicates the direction in which the angle formed with the zenith direction is the minimum angle Θ. The broken line 502 in FIG. 5C indicates the direction that is acquired when the zenith direction is projected onto the display surface, and matches with the broken line 501 which forms the minimum angle Θ. The CPU 201 starts displaying the graphic image, regarding the direction of the broken lines 501 and 502 as the upward direction of the graphic image. According to the natural movement of the human hand, the display of the graphic image can be started by this method, so that the graphic image is displayed in the normal position with respect to the user.

By the method described in FIG. 5A and the method described in FIG. 5B and FIG. 5C, the graphic image can be continuously displayed in a state of a normal position with respect to the user, as illustrated in FIG. 4E.

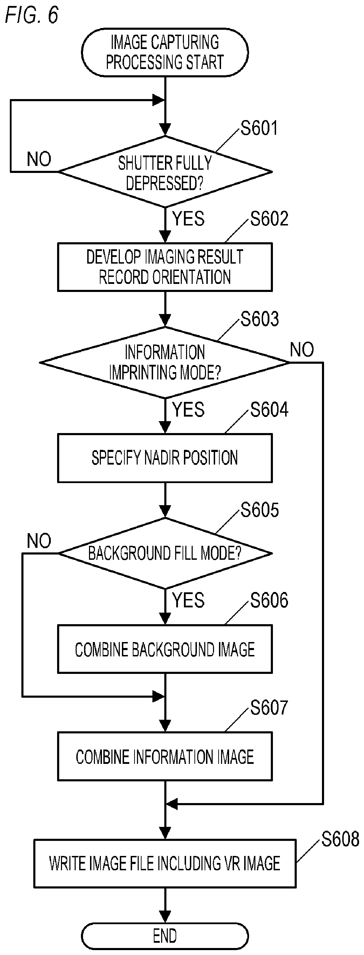

FIG. 6 is a flow chart depicting an example of the image capturing processing by the digital camera 100. The image capturing processing is implemented by the system control unit 50, which develops the program stored in the non-volatile memory 56 in the system memory 52, and executes the program.

In step S601, the system control unit 50 determines whether the shutter button 61 was fully depressed. In other words, the system control unit 50 determines whether a second shutter switch signal SW2 was generated by turning the second shutter switch 64 ON. The processing in step S601 is repeated until it is determined that the shutter button 61 was fully depressed, and if the shutter button 61 was fully depressed, processing advances to step S602.

In step S602, the system control unit 50 writes (develops) the imaging results by the imaging units 22a and 22b in the memory 32. The image captured by the imaging unit 22a and the image captured by the imaging unit 22b may be written separately, or a single VR image may be generated by combining the two images captured by the imaging units 22a and 22b, and this VR image may be written. There are various writing methods, but any one may be used. In step S602, the system control unit 50 records the detection result by the orientation detection unit 55 (current orientation of the digital camera 100) in the system memory 52.

Then in step S603, the system control unit 50 determines whether the information imprinting mode is set in the digital camera 100. If the information imprinting mode is set, processing advances to step S604, and if the information imprinting mode is not set, processing advances to step S608.

Then in step S604, the system control unit 50 specifies the nadir position (position capturing the nadir direction (ground direction)) in the VR image stored in the memory 32 based on the detection result by the orientation detection unit 55 stored in the system memory 52. Here the detection result stored in the system memory 52 is the detection result recorded in step S602, and indicates the orientation of the digital camera 100 when the VR image was captured (when image capturing processing was performed). The VR image stored in the memory 32 is the VR image written (developed) in step S602.

Then in step S605, the system control unit 50 determines whether the background fill mode is set in the digital camera 100. If the background fill mode is set, processing advances to step S606, and if the background fill mode not set, processing advances to step S607.

In step S606, in order to improve visibility of the information image to be combined in step S607, the system control unit 50 combines the background image to be the background of the information image with the VR image stored in the memory 32 (superimposes the background image on the VR image). The background image is superimposed on a position specified in step S604. Then processing advances to step S607. Just like the image reproduction processing in FIG. 3, the color, shape, transparency and the like of the background image to be combined in step S606 are not especially limited.

In step S607, the system control unit 50 combines the image information with the VR image stored in the memory 32 (superimposed the information image on the VR image). The information image (text image, icons, graphics) is superimposed on a position specified in step S604. If the processing in step S606 was performed, the information image is superimposed on the background image. Then processing advances to step S608. Just like the image reproduction processing in FIG. 3, the information image combined in step S607 indicates information that may be useful to the user (e.g. image file name, image size, image capturing date and time, and EXIF information of the VR image stored in the memory 32). In the case of a conventional silver halide camera, such basic information as image capturing date and time is combined, hence it is preferable to combine such basic information as image capturing date and time with the VR image which the imaging apparatus captures and outputs. In other words, it is preferable that the information image combined in step S607 indicates such basic information as the image capturing date and time of the VR image stored in the memory 32.

The VR image developed by the equidistant cylindrical projection is developed (converted) from the equidistant cylindrical projection format into the full-view spherical image format for the VR display. Therefore in order to combine the graphic image (background image and information image) with the VR image developed by the equidistant cylindrical projection, the graphic image is combined by performing inverse conversion of the conversion from the equidistant cylindrical projection image format into the full-view spherical image format. Thereby the graphic image can be displayed in a desired form in the VR display. Further, in order to improve visibility of the information image when the background fill mode is not set, an image that is framed with a color that is different from the main color (color inside the frame) may be used for the information image.

In step S608, the system control unit 50 generates an image file including the VR image (image data) stored in the memory 32, and writes the image file to the recording medium 90. Then the system control unit 50 ends the image capturing processing. If the information imprinting mode is set, the VR image combined with the information image (combined image) is written to the recording medium 90. If not set, the VR image is not combined with the information image, and the background image is written to the recording medium 90.

As described above in FIG. 3, it is more likely that the image value of the image in the range captured in the nadir direction (ground direction) is low. According to the above mentioned image capturing processing, the combined image is generated by superimposing the graphic image on the VR image at the position of capturing an image in the nadir direction. Thereby when the combined image generated in the image capturing processing is VR-displayed, the user can view the VR image (both the graphic image portion and the other portions) without sensing (or barely sensing) interruption by the graphic image (user friendly aspect improves).

In the image reproduction processing in FIG. 3 and the image capturing processing in FIG. 6, the direction of superimposing the graphic image is not limited to the nadir direction (ground direction). For example, the specific direction may be the zenith direction (sky direction). One of the nadir direction and the zenith direction may be used as the specific direction, or both the nadir direction and the zenith direction may be used as the specific direction. When the VR image is not a 360° image (full-view spherical image) but a 180° image (hemispherical image), there is no image in the rear direction, hence the rear direction may be used as the specific direction.

In the image reproduction processing in FIG. 3, the CPU 201 may determine the specific direction, so that the specific direction is switched between the zenith direction and the nadir direction, depending on the direction of the imaging apparatus (e.g. digital camera 100) when the VR image is captured. In the same manner, in the image capturing processing in FIG. 6, the system control unit 50 may determine the specific direction, so that the specific direction is switched between the zenith direction and the nadir direction, depending on the direction of the digital camera 100 when the VR image is captured.

Thereby it can be prevented that the graphic image is displayed in a position capturing an image in a direction (zenith direction or nadir direction) which the user was focusing on when the image was captured, and the user friendly aspect improves. For example, if the imaging apparatus was directed upward when the image was captured, it is likely that the user was focusing on the upward direction (zenith direction), hence the nadir direction is regarded as the specific direction (the graphic image should be displayed in a position captured in the nadir direction). On the other hand, if the imaging apparatus was directed downward when an image was captured, it is likely that the user was focusing on the downward direction (nadir direction), hence the zenith direction is regarded as the specific direction (the graphic image should be displayed in a position captured in the zenith direction).

However it is also possible that the user was focusing on the downward direction (nadir direction) when the imaging apparatus was directed upward. Further, it is also possible that the user was focusing on the upward direction (zenith direction) when the imaging apparatus was directed downward. In this case, the zenith direction may be regarded as the specific direction if the imaging apparatus was directed upward when the image was captured, and the nadir direction may be regarded as the specific direction if the imaging apparatus was directed downward when the image was captured.

In the digital camera 100, the orientation detection unit 55 detects the orientation of the digital camera 100. Therefore the system control unit 50 can determine the specific direction based on the detection result by the orientation detection unit 55 (orientation of the digital camera 100 when the VR image was captured).

The display apparatus 200, on the other hand, cannot directly detect the orientation of the imaging apparatus. However, the display apparatus 200 may be capable of determining the orientation of the imaging apparatus when the VR image was captured based on the VR image. In this case, the CPU 201 can determine the specific direction based on the VR image. If the orientation information indicating the orientation of the imaging apparatus when the VR image was captured were included in the metadata of the VR image, the CPU 201 could determine the specific direction based on this orientation information. However generally the orientation information is not attached to a VR image. Normally a VR image is developed by the equidistant cylindrical projection and is recorded. When the VR image developed by the equidistant cylindrical projection is recorded, the zenith information, which indicates the zenith position (position capturing the zenith direction) in the VR image, is attached as metadata. In addition, the orientation of the imaging apparatus can be determined based on the zenith information. Therefore it is preferable that the CPU 201 determines the specific direction based on the zenith information.

There are two methods to develop the VR image by the equidistant cylindrical projection. The first development method is developing a VR image acquired by the imaging unit by the equidistant cylindrical projection without correcting the angle of the VR image, that is, without performing the zenith correction (inclination correction). According to the first development method, the processing load and the processing time of the image connection processing (processing to acquire a single VR image by combining a plurality of images acquired by a plurality of imaging units) can be decreased. However, it is difficult to recognize the zenith direction, the nadir direction, the horizontal direction (direction parallel with the ground) and so forth in the VR image, since the orientation of the imaging apparatus is reflected in the VR image developed by the equidistant cylindrical projection. The second development method is correcting the angle of the VR image acquired by the imaging unit based on the orientation of the imaging apparatus (that is, performing the zenith correction), and developing the VR image after the zenith correction by the equidistant cylindrical projection. In the case of the second development method, a position on the lower end of the VR image that is developed by equidistant cylindrical projection becomes the nadir position (position capturing the nadir direction), and a position on the upper end thereof becomes the zenith position (position capturing the zenith direction). According to the second method, the zenith direction, the nadir direction, the horizontal direction (direction parallel with the ground) and so forth can be easily recognized in the VR image, since the orientation of the imaging apparatus is not reflected in the VR image developed by the equidistant cylindrical projection. However, the processing load and the processing time of the image /connection processing increase because the zenith correction is performed. As a consequence, the development method differs depending on the imaging apparatus. If the zenith information is used, an appropriate VR display (VR display in which the VR space and the real space look identical, such as displaying the nadir direction by turning the display surface to the zenith direction) can be performed, regardless the development method.

According to the first development method, in the VR image developed by the equidistant cylindrical projection, the zenith position changes in accordance with the orientation of the imaging apparatus when the image was captured, and the position capturing each direction by the imaging apparatus becomes a predetermined position, regardless the orientation of the imaging apparatus when the image was captured. In other words, the side of the grip of the imaging apparatus (side of the tripod) of the imaging apparatus is captured at a predetermined position in the VR image developed by the equidistant cylindrical projection. For example, if the grip of the imaging apparatus is located on the lower side of the imaging unit, the side of the grip is captured at the lower end portion of the VR image developed by the equidistant cylindrical projection. According to the second development method, on the other hand, the zenith correction is performed, hence in the VR image developed by equidistant cylindrical projection, the zenith position becomes a predetermined position, regardless the orientation of the imaging apparatus when the image was captured. The position capturing each direction by the imaging apparatus changes in accordance with the orientation of the imaging apparatus when the image was captured. In other words, the positions of the grip of the imaging apparatus changes in accordance with the orientation of the imaging apparatus when the image was captured.

In the case of the first development method, the CPU 201 can determine whether the imaging apparatus was turned upward from the horizontal line or downward from the horizontal line when the image was captured, based on the zenith information (zenith position in the VR image developed by the equidistant cylindrical projection). In concrete terms, if the zenith position is located in the upper half region of the VR image developed by the equidistant cylindrical projection, it is determined that the imaging apparatus was turned upward from the horizontal line when the image was captured. On the other hand, if the zenith position is located in the lower half region of the VR image developed by the equidistant cylindrical projection, it is determined that the imaging apparatus was turned downward from the horizontal line. Therefore the CPU 201 can determine a more appropriate specific direction by the processing to determine the specific direction based on the zenith information.

In the case of the second development method, on the other hand, the zenith information (zenith position in the VR image developed by the equidistant cylindrical projection) is fixed, hence the orientation of the imaging apparatus when the image was captured cannot be determined based on the zenith information. If the grip position information, which indicates a position of a grip side image in the VR image, is included in the metadata of the VR image, the CPU 201 could determine the orientation of the imaging apparatus when the image was captured based on the position information of the grip. However, the grip position information is normally not attached to the VR image.

The CPU 201 may determine the specific direction based on the zenith information, regardless whether the development method is the first development method or the second development method. As mentioned above, in the case of the first development method, the specific direction can be determined more appropriately by the processing to determine the specific direction based on the zenith information. In the case of the second development method, on the other hand, the zenith position is always located in the upper half region of the VR image developed by the equidistant cylindrical projection, regardless the orientation of the imaging apparatus when the image was captured. Therefore the same direction is always determined as the specific direction by the processing to determine the specific direction based on the zenith information, regardless the orientation of the imaging apparatus when the image was captured. For example, the nadir direction is always determined as the specific direction. In other words, the state similar to the case of fixing the specific direction, without performing the processing to determine the specific direction based on the zenith information, is implemented. This means that the specific direction is not inappropriately determined even if the processing to determine the specific direction based on the zenith information is performed for the second development method.

The various controls which are performed by the system control unit 50 in the above description may be performed by one hardware component, or may be shared by a plurality of hardware components (e.g. plurality of processors and circuits), whereby the entire apparatus is controlled. In the same manner, the various controls which are performed by the CPU 201 in the above description may be performed by one hardware component, or may be shared by a plurality of hardware components (e.g. plurality of processors and circuits), whereby the entire apparatus is controlled.

Although the present invention has been described based on the preferred embodiments thereof, the present invention is not limited to these specific embodiments, but various modes within the scope not deviating from the essence of the invention are also included in the present invention. Further, each of the above mentioned embodiments is merely an example of the present invention, and may be combined as necessary.

In the embodiments described above, the present invention is applied to a digital camera or a display apparatus, but the present invention is not limited to these examples, but is applicable to any apparatus (electronic apparatus) that can capture a VR image or display the VR image on a display unit. For example, the present invention is applicable to a personal computer, PDA, a portable telephone terminal, a portable image viewer, a printer, a digital photo frame, a music player, a game machine, an electronic book reader, a video player and the like. The present invention is also applicable to a TV, a projection apparatus, a tablet terminal, a smartphone, an AI speaker, a home electronic apparatus, an onboard apparatus, a medical apparatus and the like.

### <Other Embodiments>

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

According to the above embodiments, the following embodiments (configurations) are disclosed.
Embodiment 1. An imaging apparatus comprising:
   an acquisition unit configured to acquire an image by executing an image capturing processing;
   a detection unit configured to detect an orientation of the imaging apparatus when the image capturing processing is performed;
   a specification unit configured to specify a position in which a specific direction in the image is captured based on the orientation detected by the detection unit; and
   a combining unit configured to generate a combined image by superimposing a graphic image on the acquired image at the position specified by the specification unit. Embodiment 2. The imaging apparatus according to embodiment 1, wherein the specific direction is at least one of a zenith direction, a nadir direction and a rear direction.
Embodiment 3. The imaging apparatus according to embodiment 1 or 2, further comprising
   a determination unit configured to determine the specific direction based on the orientation detected by the detection unit, so that the specific direction is switched between a zenith direction and a nadir direction depending on a direction of the imaging apparatus when the image capturing processing is performed.
Embodiment 4. The imaging apparatus according to any one of embodiments 1 to 3, wherein the graphic image indicates an image capturing date and time of the image.
Embodiment 5. The imaging apparatus according to any one of embodiments 1 to 3,
   wherein the graphic image indicates information independent from the image. Embodiment 6. The imaging apparatus according to any one of embodiments 1 to 3,
   wherein the graphic image indicates information having nothing to do with an object of the image.
Embodiment 7. The imaging apparatus according to any one of embodiments 1 to 6, wherein the image is a 360° image or a 180° image.

A display control apparatus according to the present invention includes: a display control unit configured to control so as to display a part of an image corresponding to a viewing direction, on a screen; and a change unit configured to change the part of the image in accordance with changing the viewing direction, wherein, in a case where the part of the image is a range captured in a specific direction in the image, the display control unit controls so as to display a graphic image superimposed on the part of the image.

## Claims

1. A display control apparatus comprising:
a display control unit configured to control so as to display a part of an image corresponding to a viewing direction, on a screen; and
a change unit configured to change the part of the image in accordance with changing the viewing direction,
wherein, in a case where the part of the image is a range captured in a specific direction in the image, the display control unit controls so as to display a graphic image superimposed on the part of the image.

2. The display control apparatus according to claim 1, wherein the specific direction is at least one of a zenith direction, a nadir direction and a rear direction.

3. The display control apparatus according to claim 1 or 2, further comprising a determination unit configured to determine the specific direction based on the image, so that the specific direction is switched between a zenith direction and a nadir direction depending on a direction of an imaging apparatus when the image was captured.

4. The display control apparatus according to any one of claims 1 to 3,
wherein in the case where the part of the image is the range captured in the specific direction in the image, the display control unit controls in accordance with a rotation of the part of the image around the specific direction as a rotation axis, so that the graphic image rotates in an opposite direction of the rotation direction of the part of the image.

5. The display control apparatus according to any one of claims 1 to 4, wherein the graphic image indicates at least one of a file name of the image, an image capturing date and time of the image, a size of the image and an exchangeable image file format (EXIF) information of the image.

6. The image processing apparatus according to any one of claims 1 to 4,
wherein the graphic image indicates information independent from the image.

7. The image processing apparatus according to any one of claims 1 to 4,
wherein the graphic image indicates information having nothing to do with an object of the image.

8. The display control apparatus according to any one of claims 1 to 7, further comprising
an orientation detection unit configured to detect an orientation of a display panel having the screen,
wherein the viewing direction is changed based on the detected orientation of the display panel.

9. The display control apparatus according to any one of claims 1 to 8, further comprising
an operation detection unit configured to detect a user operation for a predetermined operation member,
wherein the viewing direction is changed based on the detected user operation.

10. The display control apparatus according to any one of claims 1 to 9,
wherein the image is generated by performing a predetermined image processing on a plurality of images captured by a plurality of image sensors, and is recorded in a recording medium,
wherein the display control unit reads the image from the recording medium and displays the part of the image.

11. The display control apparatus according to any one of claims 1 to 10, wherein the image is a 360° image or a 180° image.

12. A control method for a display control apparatus, the control method comprising:
a display control step of controlling so as to display a part of an image corresponding to a viewing direction, on a screen; and
a change step of changing the part of the image in accordance with changing the viewing direction,
wherein, in a case where the part of the image is a range captured in a specific direction in the image, in the display control step, it is controlled so as to display a graphic image superimposed on the part of the image.

13. A program for causing a computer to perform the control method according to claim 12.

14. A computer readable medium storing a program for causing a computer to perform the control method according to claim 12.
